# EUROPEAN PATENT SPECIFICATION

(11) **EP 0 416 632 B1**
(45) Date of publication and mention of the grant of the patent: **29.07.1998**
(21) Application number: 90117208.0
(22) Date of filing: 06.09.1990
(51) Int. Cl.: C09B 47/067, C08K 5/34, G02F 1/35

(54) **Organic nonlinear optical material**
Organisches nichtlineares optisches Material
Matériau optique organique non linéaire

(30) Priority: 08.09.1989 JP 233496/89
(43) Date of publication of application: 13.03.1991
(73) Proprietor: UNITIKA LTD., Amagasaki-shi Hyogo (JP); Kenkyusho, Rikagaku, Wako-shi, Saitama, 351-01 (JP)
(72) Inventor: Hosoda, Masahiro, Wako-shi, Saitama, 351-01 (JP); Wada, Tatsuo, Wako-shi, Saitama, 351-01 (JP); Sasabe, Hiroyuki, Musashino-shi, Tokyo 180 (JP); Yamada, Akira, Kamifuoka-shi, saitama, 356 (JP)
(74) Representative: Wächtershäuser, Günter, Prof. Dr.

(56) References cited:
- EP-A- 0 232 964
- US-A- 4 854 676
- INORGANIC CHEMISTRY vol. 20, no. 11, November 1981, pages 3766 - 3770; E.A. CUELLAR ET AL: 'synthesis and characterization of metallo and metal-free octaalkylphthalocyanines and uranyl decaalkylsuperphthalocyanines'

## Description

The present invention relates to a nonlinear optical waveguide element useful for frequency up-conversion devices, optical shutters and electro-optic modulators and comprising a phthalocyanine derivative.

As a nonlinear optical material, an inorganic ferroelectric material such as potassium dihydrogenphosphate (KDP) or lithium niobate (LiNbO₃) has been developed to a practical level as a frequency up-conversion device. With organic material, nonlinear optical effects are due to conjugated π electrons. Therefore, the organic material has such features as a large nonlinear optical constant, an ultrafast nonlinear optical response and a high breakdown threshold value. Thus, the organic nonlinear optical material is expected to be a prospective basic material in the optoelectronics field in the future. Further, the organic material has additional merits that various methods are available for the preparation of the material, and the molecular modification is possible. Under these circumstances, a research has been energetically conducted for the organic nonlinear optical material. The nonlinear optical effect is a phenomenon which occurs when a laser light having a large field intensity is radiated to a material, and the relation between the polarization thereby induced in the material and the photoelectric field becomes nonlinear. The nonlinear properties corresponding to the 2nd power, 3rd power or higher power of the electric field appear, and they are called the second order nonlinear optical effect, the third order nonlinear optical effect or the like, respectively. A material showing the second order nonlinear optical effect is applicable to a device utilizing a refractive index change proportional to the field intensity (an electro-optic effect), and it is thus expected to be applied to an electro-optic modulator (EO modulator) for optical communication. A material showing the third order nonlinear optical effect is expected to be developed for an optical memory or an optical logic device utilizing intensity dependent refractive index. For such applications, the applicability to an optical waveguide structure becomes important for the organic material having a nonlinear optical effect. By establishing an optical waveguide, it becomes possible to confine light in a one or two dimensional space and to achieve a high electric field with a low power. Therefore, in such an optical waveguide, the nonlinear optical effect can be produced efficiently. Further, in the optical waveguide, it is possible to control the light, whereby integration to an optical device will be facilitated.

Heretofore, polyacetylene and polydiacetylene having π-electron conjugation have been well known as organic materials showing large third order nonlinear optical effets. However, these materials are not only hardly fusible but also hardly soluble in usual organic solvents or organic polymers. Therefore, they are hardly applicable to an optical waveguide structure, and they are poor in processability. Accordingly, it is not only difficult to control the film thickness, which is essential for constructing an optical waveguide, but also difficult to form a thin-film having excellent mechanical strength. With such difficulties, development of these materials for optical devices is practically limited.

US-A-4,854,676 teaches a bi-stable optical device with naphthocyanine compounds having non-linear properties. EP-A-0 232 964 teaches optical information media requiring aluminum phthalocyanine-polymer compositions with linear optical properties.

Under these circumstances, the present inventors have conducted extensive researches to overcome the above problems and as a result, have found it possible to obtain a material which is soluble in an organic polymer and has a high nonlinear optical effect, by introducing an alkyl group to a metal phthalocyanine compound.

Thus, the present invention provides a nonlinear optical waveguide element which comprises a thin film of an organic non-linear optical material comprising a phthalocyanine derivative of the formula: 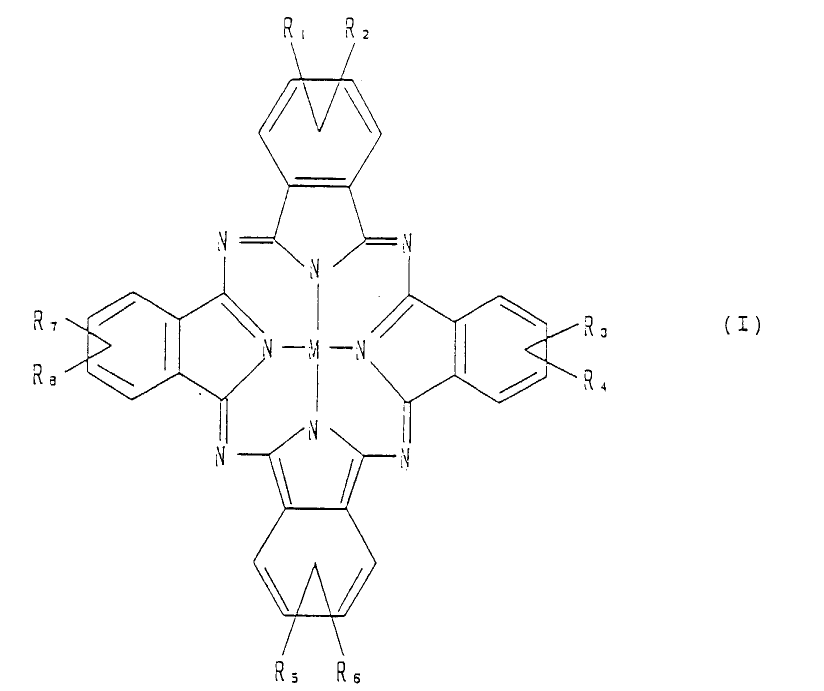 wherein M is hydrogen, a metal, a metal oxide or a metal halide, each of R₁ to R₈ is hydrogen or an alkyl group, provided that at least one of R₁ to R₈ is an alkyl group.

The present invention also provides an organic non-linear optical material, which is a mixture of the phthalocyanine derivative of the formula I and an organic polymer.

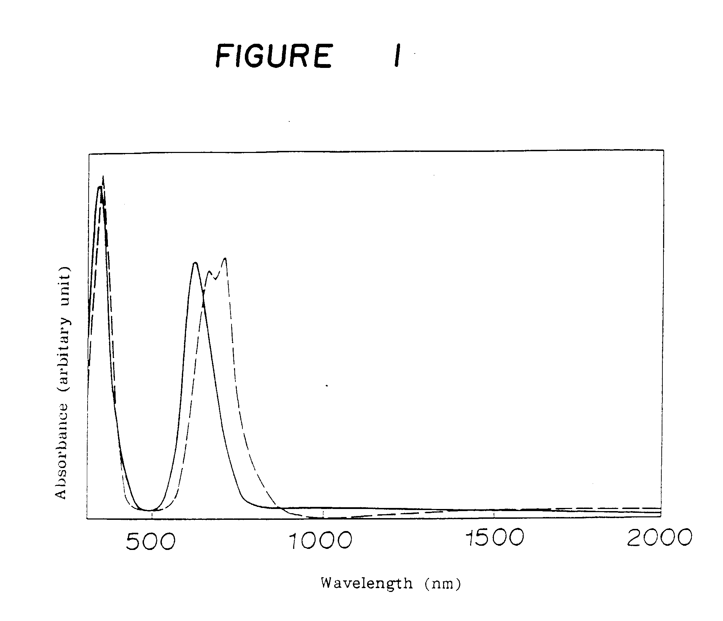

In the accompanying drawings, Figure 1 is a graph showing the absorption spectra of thin-films formed by spin coating of TBH2Pc (―) and TBVOPc (------).

Figures 2 and 3 are graphs showing the results of measurement of the THG maker fringes of a fused silica substrate and a TBH2Pc thin-film/fused silica substrate, respectively.

Figure 4 is a graph showing the relation between the contents of the phthalocyanine derivatives [(TBH2Pc(○), TBVOPc(Δ)] of the present invention in PMMA and the absorption coefficients at a wavelength of the maximum absorbance.

Figure 5 is a graph showing the relation between the contents of the phthalocyanine derivatives [TBH2Pc(○), TBVOPc(Δ)] of the present invention in PMMA and the third order nonlinear susceptibility (χ⁽³⁾).

Figure 6 is a graph showing the absorption spectrum of the polystyrene thin-film containing 10% by weight of (t-Bu)₁VOPc after the ethyl acetate vapor treatment.

Now, the present invention will be described in detail with reference to the preferred embodiments.

In the definition of the above formula I, preferred examples of M representing a metal, a metal oxide or a metal halide, include VO, Sn, Pb, GaCl and AlF.

Each of R₁ to R₈ is hydrogen or an alkyl group, and at least one of R₁ to R₈ is an alkyl group. The chain length of the alkyl group for R₁ to R₈ is from 1 to 30 carbon atoms, preferably from 3 to 6 carbon atoms. Specific examples of the alkyl group include iso-propyl, iso-butyl, sec-butyl, tert-butyl, iso-amyl, sec-amyl and tert-amyl. As a more preferred example, a phthalocyanine derivative having tert-butyl groups introduced thereinto exhibits the most excellent properties. Among R₁ to R₈, the larger the number of alkyl groups, the better the solubility. However, from the viewpoint of efficient optical nonlinearity, the number of alkyl groups is preferably one or two. Surprisingly the phthalocyanine derivative of the present invention can be formed by itself into a cast film from its solution in a usual organic solvent such as chloroform, methylene chloride, acetone or dimethylformamide (DMF). Further, a phthalocyanine derivative having tert-butyl groups introduced thereinto exhibits excellent solubility and dissolves in an organic polymer even at a high content. In the present invention, the state in which the phthalocyanine derivative is dissolved in an organic polymer, is meant for a state having excellent optical uniformity without light scattering due to aggregation of molecules, which is referred to as "a molecularly doped polymer".

The material of the formula I can usually be synthesized by a method disclosed in Inorg. Chem. 20, 3766 (1981). Namely, it can be prepared by mixing an alkylphthalonitrile and/or a dialkylphthalonitrile and phthalonitrile at desired proportions and reacting them with various metal salts at a high temperature of 250°C in a nitrogen stream for a few hours. The product thereby obtained can be dissolved in chloroform or methylene chloride and purified by column chromatography on silica gel. The alkyl phthalonitrile and the dialkylphthalonitrile as the reaction precursors can be obtained by reacting brominated alkyl benzene and dialkyl benzene with CuCN.

The organic polymer which can be used in combination with the phthalocyanine derivative of the present invention includes, for example, an acrylate polymer such as polymethyl methacrylate, a styrene polymer such as polystyrene, a polyester polymer such as polycarbonate, a polyether polymer such as polyethylene oxide, an amide polymer such as nylon 6, an olefin polymer such as polyethylene, a cellulose polymer such as ethyl cellulose, polyvinyl alcohol, polyvinyl butyral, polyvinyl acetate, polyvinyl chloride, polyvinylidene chloride, polyglycidyl methacrylate, polyvinyl carbazole, and copolymers and mixtures thereof. As a preferred organic polymer for the present invention, polymethyl methacrylate and polycarbonate having excellent transparency, may be mentioned. The phthalocyanine derivative of the present invention can be formed by itself into a cast film from its solution in a usual organic solvent. However, taking the machanical strength of the resulting film into consideration, it is preferred to incorporate the phthalocyanine derivative in an organic polymer in an amount of from 0.2 to 50% by weight, particularly preferably from 5 to 40% by weight. The film may be prepared by a casting method or a spin coating method. Particularly by the spin coating method, it is possible to obtain a thin-film having uniform thickness, since the film-forming is thereby conducted by high speed rotation.

Conventional organic materials showing substantial third order nonlinear optical effects, are inferior in the processability, when various applications are sought. Besides, they do not provide thin-films having excellent mechanical strength. The present invention overcomes such drawbacks of the conventional organic materials. Namely, by dissolving the phthalocyanine derivative of the present invention in an organic polymer, it is possible to prepare a thin film having excellent mechanical strength and showing a large third order nonlinear optical effect. Further, for the film-forming, a simple and convenient casting method or spin coating method can be employed, whereby the film thickness, etc. can easily be controlled. Accordingly, the present invention may be applied not only to an optical switch device comprising a Fabry-Perot resonator-type modulator, a Mach Zehnder-type interference modulator, a refractive index distribution-type diffraction grating modulator or a directional coupler type modulator, an optical bistable device, or an optical logic device, but also to a frequency up-conversion device. Further, the derivative of the present invention also shows an electro-optic effect and can be used for an optical communication device comprising a phase control modulator or an electro-optic grating modulator (Bragg switch and TM-TE converter) using such a function. The derivative of the present invention may be incorporated in a photosensitive resin or a photoresist, and by employing a patterning technique by means of lithography, a nonlinear waveguide device or an optical device can be prepared.

Now, the present invention will be described in further detail with reference to Examples. However, it should be understood that the present invention is by no means restricted to such specific Examples.

### EXAMPLE 1

0.6 g of metallic sodium was reacted with 150 ml of anhydrous isopentyl alcohol, and then 50 ml of an anhydrous isopentyl alcohol solution containing 5.4 g of 4-tert-butylphthalonitrile and 0.04 g of ammonium molybdate, was slowly dropwise added thereto. This solution was reacted at 130°C for five hours, and then 160 ml of isopentyl alcohol was distilled off under reduced pressure. Then, 300 ml of methyl alcohol was added thereto, and the mixture was stirred at room temperature for about 3 hours. The precipitates thereby obtained were separated by a filter and washed with methyl alcohol. For purification of desired tetra-tert-butyl metal-free phthalocyanine (TBH2Pc), silica chromatography from chloroform was conducted twice, and purification of precipitates by means of chloroform/methanol was conducted. The finally obtained amount was 2.99 g, and the final yield was 55.3%. Various analytical results are shown below.

H-NMR (solvent: deuterated chloroform, 8.88-9.27ppm:8H, 8.12-8.21ppm:4H, 1.87-1.90ppm:36H, -2.40--1.90ppm:2H), UV-VIS absorption spectrum (solvent: chloroform, maximum absorption wavelength λₘₐₓ and [log ε], 701nm[5.23], 664nm[5.16], 342nm[4.91]), elemental analysis (calculated: C% 78.02, H% 6.82, N% 15.16, found: C% 77.72, H% 6.81, N% 15.12).

The compound thus obtained was dissolved in chloroform and spin-coated on a clean fused silica plate to form a thin film. The absorption spectrum of the thin film thus obtained, is shown by a solid line (―) in Figure 1.

The third order nonlinear optical effect was evaluated by the measurement of the optical third harmonic generation (THG). Namely, the THG Maker fringe method was conducted at a wavelength of 1,907nm. The fundamental wavelength (1,064nm) of a Q-switched Nd:YAG laser was converted to 1,907nm by Raman shifting through a high pressure hydrogen cell. The measurement was performed under reduced pressure to avoid the effect of air.

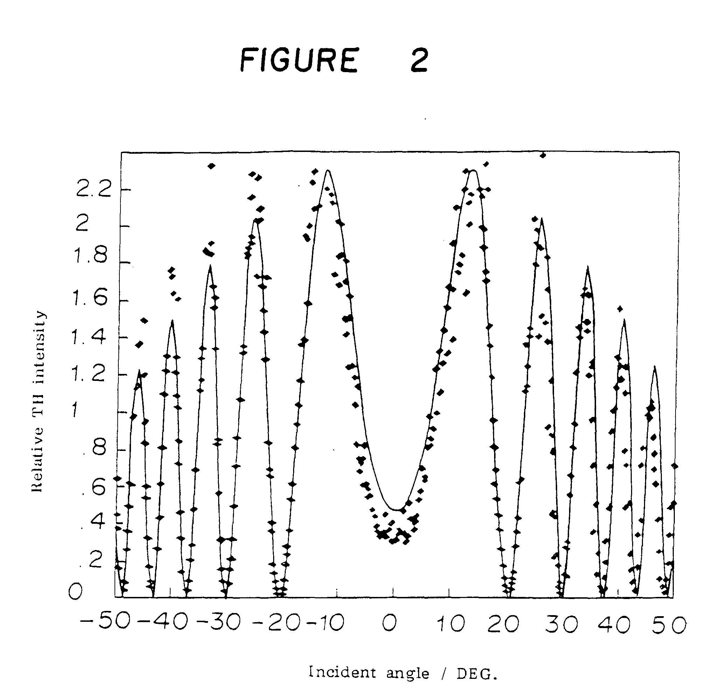

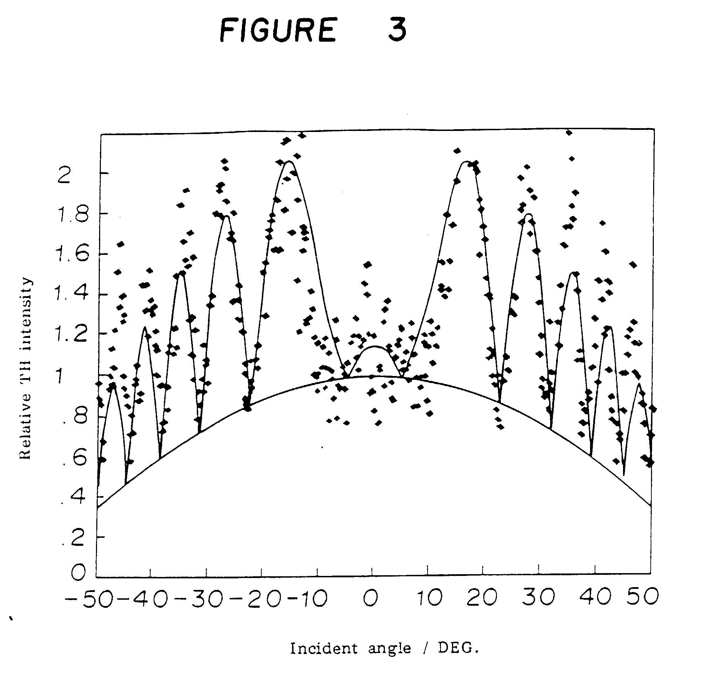

The results of the measurement of the THG Maker fringes of the fused silica substrate and the TBH2Pc/fused silica substrate are shown in Figures 2 and 3, respectively. From the fringe pattern of the fused silica substrate as a reference test sample, the incident light intensity was calculated, and from the intensity, the third order nonlinear susceptibity (χ⁽³⁾) was obtained. As a results, a value of 8.1 x 10⁻¹² (esu) was obtained for TBH2Pc.

### EXAMPLE 2

7.2 g of 4-tert-butylphthalonitrile and 7.4 g of vanadium trichloride were reacted at 250°C for two hours. The reaction system was cooled to room temperature, then 300 ml of a 5% HCl aqueous solution was added, and the mixture was boiled for 30 minutes. Further, 300 ml of a 5% NaOH aqueous solution was added thereto, and the mixture was boiled again for 30 minutes. The precipitates thus obtained were separated by means of a filter and washed sequentially with water and methanol. For purification of tetra-tert-buthylvanadylphthalocyanine (TBVOPc) as the desired product, silica gel chromatography from chloroform was conducted twice, and purification of precipitates by means of chloroform-methanol was conducted. The finally obtained amount was 1.51 g, and the final yield was 19.2%. Various analytical results are shown below.

H-NMR (solvent: deuterated chloroform, 8.0-9.7ppm:12H, 1.87-1.90ppm:36H), UV-VIS absorption spectrum (solvent: chloroform, maximum absorption wavelength λₘₐₓ and [log ε], 701nm[5.33], 346nm[4.93]), elemental analysis (calculated: C% 71.71, H% 6.02, N% 13.94, found: C% 71.62, H% 5.98, N% 13.97).

The compound thus obtained was dissolved in chloroform and spin-coated to form a thin film. The absorption spectrum of the thin film thus obtained is shown by a dotted line in Figure 1. The measurement of the nonlinear optical effect was conducted in the same manner as in EXAMPLE 1, whereby a χ⁽³⁾ value of 2.0 x 10⁻¹¹(esu) was obtained for TBVOPc.

### EXAMPLE 3

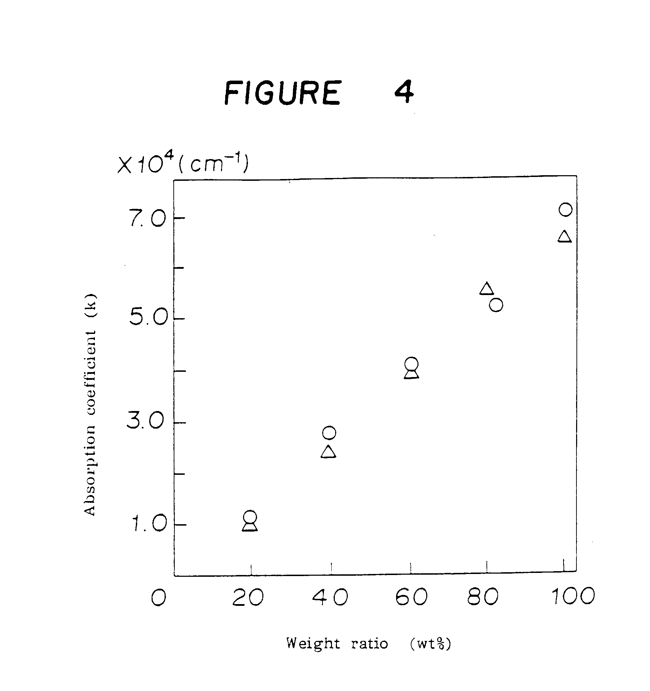

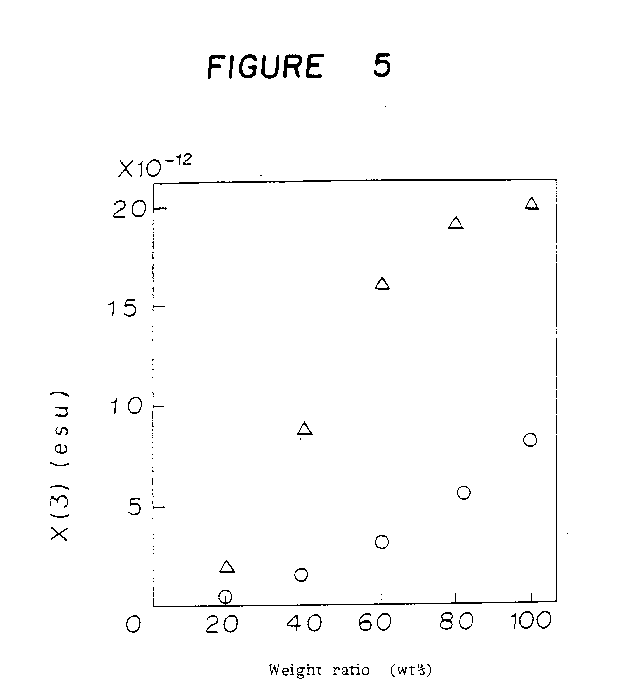

Polymethyl methacrylate (PMMA, Mn: 3.1 x 10⁴) having excellent optical transparency and TBH2Pc or TBVOPc were dissolved in chloroform in various weight ratios, and the solution was spin-coated on a fused silica plate to form a thin film. The sample thereby obtained was subjected to the measurement of the absorption spectrum. The relation between the absorption coefficient at the maximum absorption wavelength in the visible region and the content exhibits an excellent proportional relation as shown in Figure 4 [TBH2Pc(○), TBVOPc(Δ)]. Further, since no peak shift was observed due to the difference in the content, it is evident that a thin film having excellent uniformity without aggregation was obtained. Further, the test sample obtained was subjected to the measurement of the nonlinear optical effect in the same manner as in EXAMPLE 1, whereby the relation between the content of the phthalocyanine derivative and the χ⁽³⁾ value was a proportional relation as shown in Figure 5 [TBH2Pc(○), TBVOPc(Δ)]. Using the phthalocyanine derivative of the present invention, it is possible to obtain a desired level of the χ⁽³⁾ value by changing its content in the organic polymer.

### EXAMPLE 4

TBVOPc was dissolved in PMMA so that its content would be 38.8% by weight, and the solution was spin-coated on a fused silica plate to form a thin film. With the thin film, light propagation was conducted with an incident light of 1064nm. The guided wave was conducted by a TE mode in accordance with a prism (FD-11) coupling method, and propagation of light was conducted, whereby a mode line was observed. This indicates that this thin-film is useful as a nonlinear waveguide.

### EXAMPLE 5

1.84 g of 4-tert-butylphthalonitrile, 3.84 g of phthalonitrile and 7.48 g of vanadium trichloride were reacted in the same manner as in EXAMPLE 2. For purification of tert-butylvanadylphthalocyanine((t-Bu)₁VOPc) as the desired product, silica gel chlomatography from chloroform was conducted twice, and then purification of the precipitates was conducted by means of chloroform-methanol.

The finally obtained amount was 1.02 g, and the final yield was 19.2%. Various analytical results are shown below.

H-NMR (solvent: deuterated chloroform, 8.0-9.7ppm:15H, 1.88-1.90ppm:9H), UV-VIS absorption spectrum (solvent: chloroform, maximum absorption wavelength λₘₐₓ and [log ε], 695nm[5.12], 626.5nm[4.40], 346nm[4.93]), elemental analysis (calculated: C% 67.92, H% 3.77, N% 17.61, found: C% 68.23, H% 3.71, N% 17.98).

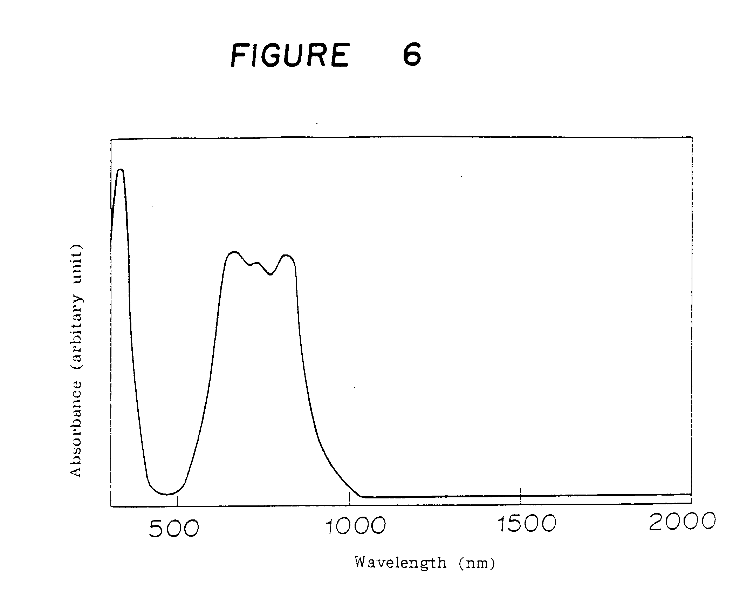

The compound thus obtained was dissolved in polystyrene (manufactured by Aldrich Company, Mw: 2.5 x 10⁵) to a concentration of 10% by weight, and the solution was spin-coated on a fused silica plate to form a thin film thereon. The test sample thus obtained was contacted with a vapor of ethyl acetate in a desiccator at room temperature for 24 hours. This test sample was subjected to measurement of the absorption spectrum, and the results are shown in Figure 6. The nonlinear optical effect was measured in the same manner as in EXAMPLE 1, whereby χ⁽³⁾ of this film was found to be 1.5 x 10⁻¹¹(esu).

## Claims

1. A non-linear optical waveguide element which comprises a thin film of an organic nonlinear optical material comprising a phthalocyanine derivative of the formula: 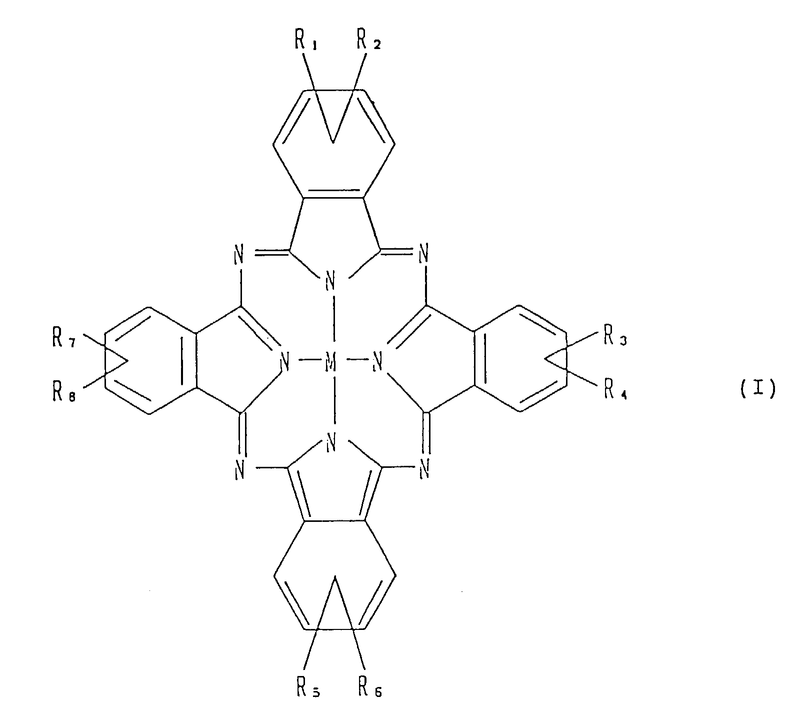 wherein M is hydrogen, a metal, a metal oxide or a metal halide, each of R₁ to R₈ is hydrogen or an alkyl group, provided that at least one of R₁ to R₈ is an alkyl group.

2. The nonlinear waveguide element according to Claim 1, wherein the metal is Sn or Pb.

3. The nonlinear waveguide element according to Claim 1, wherein the metal oxide is VO.

4. The nonlinear waveguide element according to Claim 1, wherein the metal halide is GaCl or AlF.

5. The nonlinear waveguide element according to Claim 1, wherein the alkyl group has from 1 to 30 carbon atoms.

6. The nonlinear waveguide element according to Claim 5, wherein the alkyl group has from 3 to 6 carbon atoms.

7. The nonlinear waveguide element according to Claim 1, wherein the alkyl group is at least one member selected from the group consisting of iso-propyl, isobutyl, sec-butyl, tert-butyl, iso-amyl, sec-amyl and tert-amyl.

8. The nonlinear waveguide element according to Claim 1, which is a mixture of a phthalocyanine derivative of the formula I as defined in Claim 1 and an organic polymer.

9. The nonlinear waveguide element according to Claim 8, wherein the proportion of the phthalocyanine derivative is from 0.2 to 50% by weight.

10. The nonlinear waveguide element according to Claim 8, wherein the proportion of the phthalocyanine derivative is from 5 to 40% by weight.

## Patentansprüche

1. Nicht-lineares Lichtwellenleiter-Element, umfassend einen Dünnfilm aus einem organischen nicht-linearen, optischen Material, umfassend ein Phthalocyanin-Derivat der Formel: 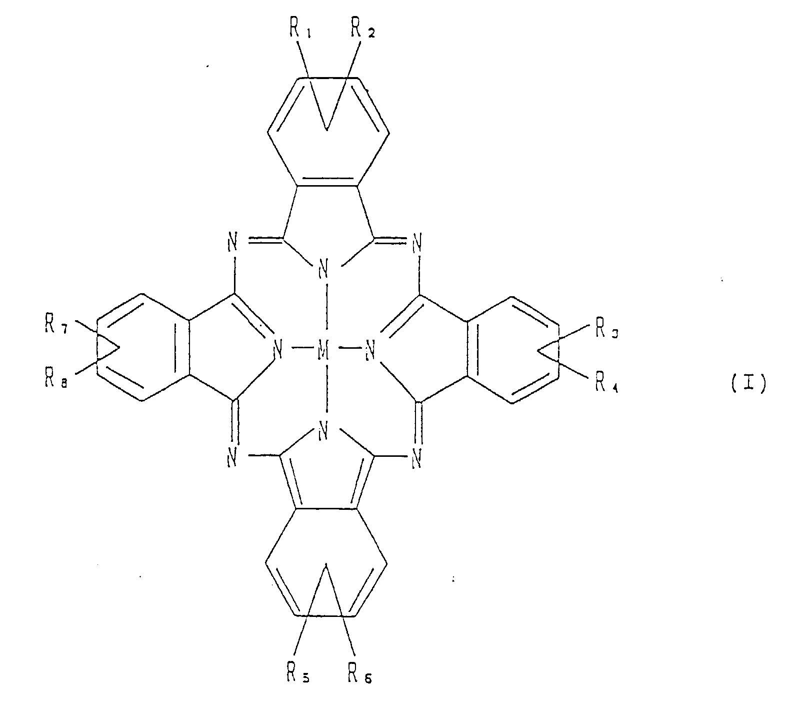 worin M Wasserstoff, ein Metall, ein Metalloxid oder ein Metallhalogenid ist, jedes von R₁ bis R₈ Wasserstoff oder eine Alkylgruppe ist, unter der Bedingung, daß mindestens eines von R₁ bis R₈ eine Alkylgruppe ist.

2. Nicht-lineares Lichtwellenleiter-Element nach Anspruch 1, worin das Metall Sn oder Pb ist.

3. Nicht-lineares Lichtwellenleiter-Element nach Anspruch 1, worin das Metalloxid VO ist.

4. Nicht-lineares Lichtwellenleiter-Element nach Anspruch 1, worin das Metallhalogenid GaCℓ oder AℓF ist.

5. Nicht-lineares Lichtwellenleiter-Element nach Anspruch 1, worin die Alkylgruppe von 1 bis 30 Kohlenstoffatome aufweist.

6. Nicht-lineares Lichtwellenleiter-Element nach Anspruch 5, worin die Alkylgruppe von 3 bis 6 Kohlenstoffatome aufweist.

7. Nicht-lineares Lichtwellenleiter-Element nach Anspruch 1, worin die Alkylgruppe mindestens eine ist, ausgewählt aus der Gruppe bestehend aus Isopropyl, Isobutyl, sec-Butyl, tert-Butyl, Isoamyl, sec-Amyl und tert-Amyl.

8. Nicht-lineares Lichtwellenleiter-Element nach Anspruch 1, das eine Mischung eines Phthalocyanin-Derivates der Formel I, wie in Anspruch 1 definiert, und eines organischen Polymers ist.

9. Nicht-lineares Lichtwellenleiter-Element nach Anspruch 8, worin der Anteil des Phthalocyanin-Derivates von 0,2 bis 50 Gew.-% beträgt.

10. Nicht-lineares Lichtwellenleiter-Element nach Anspruch 8, worin der Anteil des Phthalocyanin-Derivates von 5 bis 40 Gew.-% beträgt.

## Revendications

1. Elément formant guide d'onde optique non-linéaire qui comprend un film mince en un matériau organique optique non-linéaire comprenant un dérivé de phtalocyanine de formule : 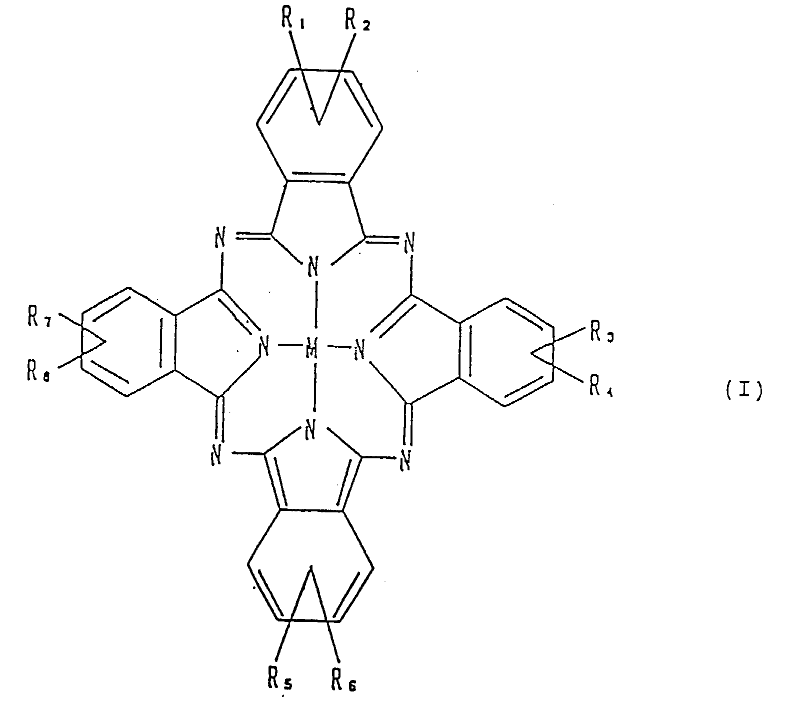 dans laquelle M est l'hydrogène, un métal, un oxyde de métal ou un halogénure de métal et R₁ à R₈ représentent chacun l'hydrogène ou un groupe alkyle, l'un au moins de R₁ à R₈ étant un groupe alkyle.

2. Elément formant guide d'onde non linéaire selon la revendication 1, dans lequel le métal est le Sn ou le Pb.

3. Elément formant guide d'onde non linéaire selon la revendication 1, dans lequel l'oxyde de métal est le VO.

4. Elément formant guide d'onde non linéaire selon la revendication 1, dans lequel l'halogénure de métal est le GaCl ou l'AlF.

5. Elément formant guide d'onde non linéaire selon la revendication 1, dans lequel le groupe alkyle comporte de 1 à 30 atomes de carbone.

6. Elément formant guide d'onde non linéaire selon la revendication 5, dans lequel le groupe alkyle comporte de 3 à 6 atomes de carbone.

7. Elément formant guide d'onde non linéaire selon la revendication 1, dans lequel le groupe alkyle est au moins un élément sélectionné dans le groupe composé de l'isopropyle, l'isobutyle, le sec.-butyle, le tert.-butyle, l'isoamyle, le sec.-amyle et le tert.-amyle.

8. Elément formant guide d'onde non linéaire selon la revendication 1, qui est un mélange d'un dérivé de phtalocyanine de formule I, telle que définie dans la revendication 1, et d'un polymère organique.

9. Elément formant guide d'onde non linéaire selon la revendication 8, dans lequel la proportion du dérivé de phtalocyanine est de 0,2% à 50% en poids.

10. Elément formant guide d'onde non linéaire selon la revendication 8, dans lequel la proportion du dérivé de phtalocyanine est de 5% à 40% en poids.
